# EUROPÄISCHE PATENTSCHRIFT

(11) **EP 1 046 704 B1**
(45) Veröffentlichungstag und Bekanntmachung des Hinweises auf die Patenterteilung: **25.06.2003**
(21) Anmeldenummer: 99122550.9
(22) Anmeldetag: 12.11.1999
(51) Int. Cl.: C12G 3/06, A23N 1/02

(54) **Vorrichtung zum Herstellen von Batida-Getränken**
Apparatus for producing Batida-beverages
Appareil pour la préparation des boissons du type "Batida"

(30) Priorität: 22.04.1999 DE 19918197
(43) Veröffentlichungstag der Anmeldung: 25.10.2000
(73) Patentinhaber: Anton Riemerschmid, Weinbrennerei und Likörfabrik GmbH & Co.KG, 84635 Erding (DE)
(72) Erfinder: Noever, Norbert, 41462 Neuss (DE)
(74) Vertreter: Paul, Dieter-Alfred, Dipl.-Ing.

(56) Entgegenhaltungen:
- DE-U- 29 905 648
- US-A- 2 703 522
- DATABASE WPI Section Ch, Week 199423 Derwent Publications Ltd., London, GB; Class D14, AN 1994-185904 XP002145470 & JP 06 121661 A (UEDA S), 6. Mai 1994 (1994-05-06)

## Beschreibung

Die vorliegende Erfindung betrifft eine Vorrichtung zum Herstellen von Batida-Getränken, insbesondere von Caipirinha, indem Schalenfrüchte samt Schale in wenigstens vier Teile zerkleinert und in einem Gefäß unter Auspressung des Fruchtsaftes zerquetscht werden und das Gemisch aus Fruchtsaft und zerquetschten Früchten mit Eis und Spirituosen aufgefüllt wird.

Sogenannte Batida-Getränke erfreuen sich wachsender Beliebtheit. Das bekannteste von ihnen, die Caipirinha, wird hergestellt, indem Limetten samt Schale zerkleinert und anschließend in einem Glas mit einem Holzstößel unter Auspressung des Fruchtsaftes zerquetscht werden. Das entstehende Gemisch aus Fruchtsaft und zerquetschten Früchten wird anschließend mit Zucker, flüssigen Zucker-Honig-Sirupen, gestoßenem Eis und Zuckerrohrschnaps aufgefüllt und verrührt.

Problematisch an der Herstellung von Batida-Getränken ist, daß das Zerquetschen der Limetten oder anderen Schalenfrüchte, das mit einem Holzstößel erfolgt, kraft- und zeitaufwendig ist, so daß es in Bars oder auf größeren Veranstaltungen nur mit erheblichem Personalaufwand möglich ist, größere Mengen dieser Getränke herzustellen.

Aus der US-A-2,703,522 ist eine Zitruspresse bekannt, mit der ein Auspressen der Früchte erfolgt, indem ein Preßelement, welches an einem Ständer gehalten ist, über einen manuell betätigten Hebelmechanismus auf- und abwärts bewegt wird.

Ein Problem besteht allerdings darin, daß mit der bekannten Zitruspresse nur halbe Früchte ausgepreßt werden können, während bei der Herstellung von Batida-Getränken bekannterweise die Schalenfrüchte zu Würfeln zerkleinert werden, bevor sie zerquetscht werden.

DE-U-299 05 648 offenbart einen manuell betätigten entsafter und JP-A-06 121 661 offenbart eine Vorrichtung zur Herstellung von Orangensaft.

Entsprechend ist es die Aufgabe der vorliegenden Erfindung, eine Vorrichtung zur Herstellung von Batida-Getränken zu schaffen, mit der Schalenfrüchte, die in wenigstens vier Teile zerschnitten sind, leicht ausgequetscht werden können.

Zur Lösung dieser Aufgabe ist die erfindungsgemäße Vorrichtung gekennzeichnet durch, einen Ständer, an dem ein Stößel auf- und abwärts bewegbar und um eine aufrechte Achse drehbar gehalten ist, und einen am Ständer vorgesehenen Hebelmechanismus, der mit dem Stößel derart gekoppelt ist, daß eine Schwenkbewegung des Betätigungshebels sowohl in eine Auf- und Abwärtsbewegung als auch in eine Drehbewegung des Stößels umgesetzt wird.

Erfindungsgemäß erfolgt das Zerquetschen der Schalenfrüchte somit, indem der Stößel über den Hebelmechanismus auf- und abwärts bewegt wird und dabei gleichzeitig eine Drehbewegung ausführt. Durch diese kombinierte Preß- und Drehbewegung können auch kleingeschnittene Früchte besonders effizient zerquetscht und ausgepreßt werden.

Aufgabe der vorliegenden Erfindung ist es daher, das Verfahren zum Herstellung von Batida-Getränken der eingangs genannten Art zu vereinfachen. Des weiteren soll eine Vorrichtung zur Durchführung des Verfahrens angegeben werden. Zweckmäßigerweise weist der Hebelmechanismus einen Betätigungshebel auf, der mit dem Stößel derart gekoppelt ist, daß eine Abwärtsbewegung des freien Hebelendes in eine Abwärtsbewegung des Stößels und in umgekehrter Richtung eine Aufwärtsbewegung des freien Hebelendes in eine Aufwärtsbewegung des Stößels umgesetzt wird. Dabei sollte ein Rückstellelement beispielsweise in Form einer Druckfeder vorgesehen sein, das den Betätigungshebel in seine obere Ausgangsstellung drückt.

Es hat sich als vorteilhaft herausgestellt, wenn der Stößel an seiner die Quetschfläche bildenden Unterseite geriffelt ausgebildet ist. Diese Riffelungen bewirken nämlich, daß der Stößel fest an den zu zerquetschenden Fruchtstücken anliegt und von diesen nicht abrutschen kann. Die Riffelungen können beispielsweise gitterartig an der Unterseite des Stößels vorgesehen sein.

In Ausbildung der Erfindung ist vorgesehen, daß die Anordnung aus Stößel und Hebelmechanismus höhenverstellbar am Ständer angeordnet ist. Hierdurch wird die Möglichkeit geschaffen, unterschiedlich hohe Gefäße zum Zerquetschen der Früchte zu verwenden. Zweckmäßigerweise kann zur exakten Positionierung an dem Ständer eine Skala vorgesehen sein.

Der Stößel, der beispielsweise aus Holz oder Kunststoff bestehen kann, weist in bevorzugter Weise am oberen Endbereich ein Spritzschutzelement auf, das so positioniert oder positionierbar ist, daß es die Oberseite des Gefäßes, in dem sich die zu zerquetschenden Früchte befinden, abdeckt, wenn der Stößel seine untere Endstellung erreicht.

Der Ständer kann so ausgebildet sein, daß er direkt an einer Theke oder dergleichen befestigt werden kann. Gemäß einer Ausbildungsform der vorliegenden Erfindung ist der Ständer jedoch an einer Grundplatte befestigt, die gleichzeitig eine Auflagefläche für das Gefäß bildet. Die Grundplatte kann auch als Schneidbrett zum Zerschneiden der Schalenfrüchte vor dem Zerquetschen dienen.

Gemäß einer weiteren Ausführungsform der Erfindung kann eine Schneideinheit vorgesehen sein, die einen Ständer, an dem ein Messer auf- und abwärts bewegbar gehalten ist, und einen am Ständer angelenkten Betätigungshebel, der mit dem Messer gekoppelt ist, um das Messer durch eine Hebelbewegung auf- und abwärts zu bewegen, aufweist. Das Messer sollte dabei geeignet sein, eine Frucht in einem einzigen Abwärtshub in eine geeignete Anzahl von Teilen, wenigstens aber vier Teile, zu zerschneiden. Dazu kann das Messer mehrere Schneiden oder Schneidenabschnitte aufweisen, die sternförmig zusammenlaufen oder auch parallel zueinander angeordnet sind. Wesentlich ist, daß die Frucht durch einen Messerhub so zerteilt wird, daß sie anschließend mit dem Stößel zerquetscht werden kann.

In bevorzugter Weise sind in den Zwischenräumen zwischen den Schneiden bzw. Schneidenabschnitten des Messers Stößel vorgesehen, die an dem Messer auf- und abwärts bewegbar angeordnet sind und durch Rückstellelemente, insbesondere Schraubenfedern, in Richtung ihrer unteren Endlage gedrückt werden. Bei dieser Ausführungsform werden die Stößel, wenn das Messer in die Frucht eindringt, entgegen der Kraft der Rückstellelemente relativ zu dem Messer nach oben bewegt. Sobald der Schneidvorgang beendet ist und das Messer wieder aufwärts bewegt wird, werden dann die Stößel durch die Rückstellkraft der Schraubenfedern wieder nach unten gedrückt, wobei sie die Fruchtstücke von dem Messer lösen. Hierdurch wird sichergestellt, daß keine Fruchtstücke an dem Messer haften bleiben.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine Vorrichtung zum Zerquetschen von Schalenfrüchten gemäß der vorliegenden Erfindung in perspektivischer Ansicht und
- Figur 2: den Stößel der Vorrichtung aus Figur in Unteransicht.

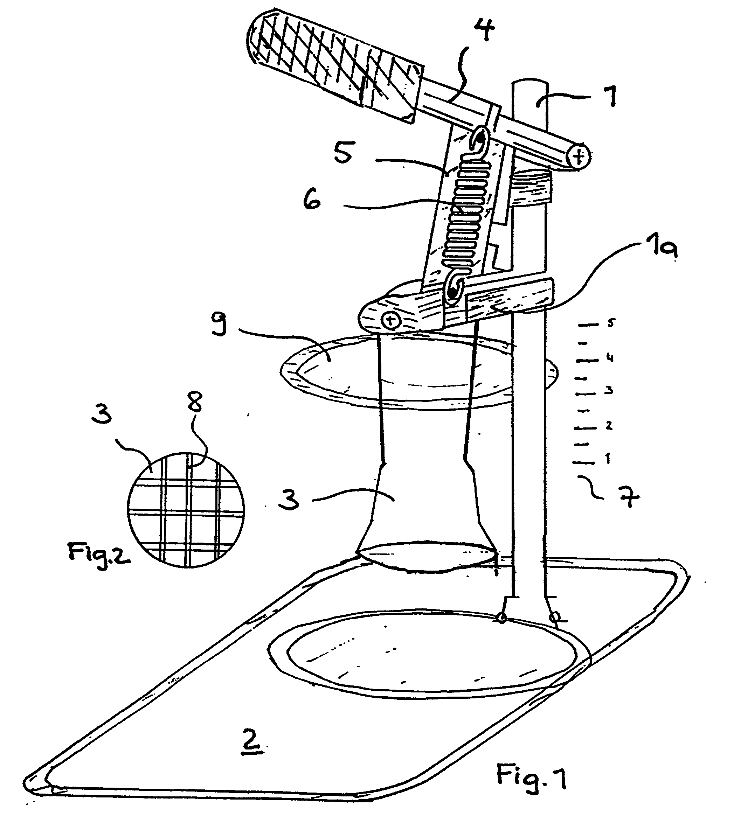

In Figur 1 ist eine Vorrichtung dargestellt, mit der bei der Herstellung von Batida-Getränken Schalenfrüchte wie beispielsweise Limetten unter Auspressung des Fruchtsaftes zerquetscht werden können. Die Vorrichtung umfaßt einen Ständer 1, der an einer Grundplatte 2 aus Holz oder Kunststoff angebracht ist. Die Grundplatte 2 bildet eine Aufstellfläche für einen nicht dargestellten Becher, in dem sich die zu zerquetschenden Früchte befinden. An dem Ständer 1 ist ein Stößel 3 vorgesehen, der an einem ständerfesten Arm 1a auf- und abwärts bewegbar geführt ist. Das obere Ende des Stößels 3 ist mit einem Hebelmechanismus gekoppelt, über den er manuell betätigt werden kann. In der dargestellten Ausführungsform gehören zu dem Hebelmechanismus ein Betätigungshebel 4, der an seinem einen Ende an dem Ständer 1 angelenkt und in einer vertikalen Ebene verschwenbar ist, und ein Verbindungshebel 5, der mit dem Betätigungshebel 4 und dem oberen Ende des Stößels 3 jeweils gelenkig verbunden ist und eine abwärts gerichtete Schwenkbewegung des Betätigungshebels 4 in eine Abwärtsbewegung des Stößels 3 sowie in umgekehrter Richtung eine aufwärts gerichtete Schwenkbewegung des Betätigungshebels 4 in eine Aufwärtsbewegung des Stößels 3 umsetzt. Zwischen Ständerarm 1a und dem Betätigungshebel 4 stützt sich eine Druckfeder 6 ab, die den Betätigungshebel 4 in eine obere Ausgangslage drückt.

Zum Herstellen eines Batida-Getränks werden die hierfür benötigen Früchte, beispielsweise Limetten, zunächst mit einem Messer zerteilt, und die Fruchtstücke werden in ein Gefäß gefüllt. Dieses Gefäß wird dann auf der Grundplatte 2 so plaziert, daß der Stößel 3 in das Gefäß eingreift. Dabei kann die Anordnung bestehend aus Hebelmechanismus und Stößel 3 an dem Ständer 1 ggf. mit Hilfe einer am Ständer 1 vorgesehenen Skala 7 in der Höhe verstellt werden, sofern dies erforderlich ist. Anschließend wird der Stößel 3 betätigt, indem der Betätigungshebel 4 manuell nach unten gedrückt wird. Hierdurch wird der Stößel 3 entgegen der Rückstellkraft der Druckfeder 6 nach unten bewegt und zerquetscht dabei die Fruchtstücke in dem Gefäß. Um hierbei zu gewährleisten, daß die Fruchtstücke nicht von dem Stößel 3 abrutschen, ist die Stößelunterseite, wie in Figur 2 dargestellt ist, mit einer Riffelung in Form von rasterartig angeordneten Vertiefungen 8 versehen. Außerdem ist an dem Stößel 3 ein Spritzschutzelement 9 vorgesehen, das im unteren Endbereich der Abwärtsbewegung des Stößels 3 das Gefäß abdeckt. Nach dem Herunterdrücken wird der Stößel 3 wieder durch eine Aufwärtsbewegung des Betätigungshebels 4, die durch die Rückstellkraft der Druckfeder 6 ausgeführt oder zumindest unterstützt wird, in die Ausgangslage bewegt, und dieser Vorgang wird mehrfach wiederholt, bis die Früchte in hinreichendem Maß zerquetscht sind.

Das Zerquetschen wird noch erleichtert, wenn der Stößel 3 bei seiner Abwärtsbewegung zusätzlich eine Drehbewegung um eine aufrechte Achse, beispielsweise seine Längsachse, ausführt. Hierzu kann eine mechanische Koppelung vorgesehen sein, die die Schwenkbewegung des Betätigungshebels 4 in eine entsprechende Drehbewegung des Stößels 3 umsetzt.

## Patentansprüche

1. Vorrichtung zum Herstellen von Batida-Getränken, insbesondere von Caipirinha, indem Schalenfrüchte samt Schale zerkleinert und in einem Gefäß unter Auspressung des Fruchtsaftes zerquetscht werden und das Gemisch aus Fruchtsaft und zerquetschten Früchten mit Eis und Spirituosen aufgefüllt wird, **gekennzeichnet durch** einen Ständer (1), an dem ein Stößel (3) auf- und abwärts bewegbar und um eine aufrechte Achse drehbar gehalten ist, und einen am Ständer (1) vorgesehenen Hebelmechanismus, der mit dem Stößel (3) derart gekoppelt ist, daß eine Schwenkbewegung des Betätigungshebels (4) sowohl in eine Auf- und Abwärtsbewegung als auch in eine Drehbewegung des Stößels (3) umgesetzt wird.

2. Vorrichtung nach Anspruch 1, **dadurch gekennzeichnet, daß** der Hebelmechanismus einen Betätigungshebel (4) aufweist, der mit dem Stößel (3) derart gekoppelt ist, daß eine Abwärtsbewegung des freien Hebelendes in eine Abwärtsbewegung des Stößels (3) und eine Aufwärtsbewegung des freien Hebelendes in eine Aufwärtsbewegung des Stößels (3) umgesetzt wird.

3. Vorrichtung nach Anspruch 2, **dadurch gekennzeichnet, daß** ein Rückstellelement (6) vorgesehen ist, das den Betätigungshebel (4) in seine obere Ausgangsstellung drückt.

4. Vorrichtung nach Anspruch 3, **dadurch gekennzeichnet, daß** das Rückstellelement eine Druckfeder (6) ist.

5. Vorrichtung nach einem der Ansprüche 1 bis 4, **dadurch gekennzeichnet, daß** der Stößel (3) an seiner Unterseite geriffelt ausgebildet ist.

6. Vorrichtung nach einem der Ansprüche 1 bis 5, **dadurch gekennzeichnet, daß** die Anordnung aus Stößel (3) und Hebelmechanismus höhenverstellbar am Ständer (1) angeordnet ist.

7. Vorrichtung nach einem der Ansprüche 1 bis 6, **dadurch gekennzeichnet, daß** der Stößel (3) aus Holz oder Kunststoff besteht.

8. Vorrichtung nach einem der Ansprüche 1 bis 7, **dadurch gekennzeichnet, daß** am oberen Endbereich des Stößels (3) ein Spritzschutzelement (9) vorgesehen ist, welches im Bereich der unteren Endstellung des Stößels (3) die Oberseite des Gefäßes abdeckt.

9. Vorrichtung nach einem der Ansprüche 1 bis 8, **dadurch gekennzeichnet, daß** der Ständer (1) an einer Grundplatte (2) befestigt ist, die eine Auflagefläche für das Gefäß bildet.

10. Vorrichtung nach einem der Ansprüche 1 bis 9, **dadurch gekennzeichnet, daß** eine Schneideinheit mit einem Ständer, an dem ein Messer auf- und abwärts bewegbar gehalten ist, und einem am Ständer angelenkten Hebel, der mit dem Messer gekoppelt ist, um das Messer durch eine Hebelbewegung auf- und abwärts zu bewegen, vorgesehen ist.

11. Vorrichtung nach Anspruch 10, **dadurch gekennzeichnet, daß** das Messer geeignet ist, um eine Frucht bei einem Abwärtshub in wenigstens vier Teile zu zerschneiden.

12. Vorrichtung nach Anspruch 10, **dadurch gekennzeichnet, daß** das Messer mehrere Schneiden oder Schneidenabschnitte aufweist, die sternförmig zusammenlaufend angeordnet sind.

13. Vorrichtung nach Anspruch 10, **dadurch gekennzeichnet, daß** das Messer mehrere Schneiden aufweist, die parallel zueinander angeordnet sind.

14. Vorrichtung nach einem der Ansprüche 10 bis 12, **dadurch gekennzeichnet, daß** in den Zwischenräumen zwischen den Schneiden bzw. Schneidenabschnitten Stößel vorgesehen sind, die an dem Messer auf- und abwärts bewegbar angeordnet sind und durch Rückstellelemente, insbesondere durch Schraubenfedern, in Richtung ihrer unteren Endlage gedrückt werden.

## Claims

1. Apparatus for producing Batida-beverages, particularly Caipirinha, by comminuting shell-fruits and shells, squeezing them in a vessel, pressing out the fruit juice, and adding ice and spirits to the mixture of fruit juice and squeezed fruits, **characterised by** a stand (1) on which a pestle (3) is retained so that it moves up and down and rotates about a perpendicular axis, and by a lever mechanism fitted on the stand (1) and connected to the pestle (3) so that a swivel movement of the actuating lever (4) is converted both to an up and down movement and to a rotary movement of the pestle (3).

2. Apparatus according to claim 1, **characterised in that** the lever mechanism exhibits an actuating lever (4) which is connected to the pestle (3) so that a downward movement of the free lever end is converted to a downward movement of the pestle (3) and an upward movement of the free lever end is converted to an upward movement of the pestle (3).

3. Apparatus according to claim 2, **characterised in that** a restoring element (6) is provided which pushes the actuating lever (4) into its upper initial position.

4. Apparatus according to claim 3, **characterised in that** the restoring element is a compression spring (6).

5. Apparatus according to claims 1 to 4, **characterised in that** the pestle (3) is ribbed on its lower side.

6. Apparatus according to one of claims 1 to 5, **characterised in that** the arrangement of pestle (3) and lever mechanism is mounted vertically adjustably on the stand (1).

7. Apparatus according to one of claims 1 to 6, **characterised in that** the pestle (3) consists of wood or plastic.

8. Apparatus according to one of claims 1 to 7, **characterised in that** a splash guard element (9) is provided in the upper end region of the pestle (3), which element covers the top of the vessel in the region of the lower end position of the pestle (3).

9. Apparatus according to one of claims 1 to 8, **characterised in that** the stand (1) is secured to a base plate (2) which forms a supporting surface for the vessel.

10. Apparatus according to one of claims 1 to 9, **characterised in that** a cutting unit is provided with a stand on which a knife is retained so that it is able to move up and down, and a lever articulated to the stand and connected to the knife for the purpose of moving the knife in the upward and downward direction through a lever movement.

11. Apparatus according to claim 10, **characterised in that** the knife is suitable for comminuting a fruit into at least four parts during a downward stroke.

12. Apparatus according to claim 10, **characterised in that** the knife exhibits several cutting edges or cutting sections which are arranged so that they converge in the shape of a star.

13. Apparatus according to claim 10, **characterised in that** the knife exhibits several cutting edges which are arranged parallel with each other.

14. Apparatus according to one of claims 10 to 12, **characterised in that** pestles are provided in the intervening spaces between the cutting edges or cutting sections, which pestles are arranged on the knife so that they move up and down, and are pushed by restoring elements, particularly by helical springs, in the direction of their lower end position.

## Revendications

1. Dispositif pour préparer des boissons du type Batida, notamment du Caipirinha grâce auquel des agrumes sont coupés avec leur peau et écrasés dans un récipient en pressant le jus de fruit et le mélange de jus de fruit et de fruits écrasés est rempli avec de la glace et de l'alcool, **caractérisé par** un support (1) sur lequel un pilon (3) est maintenu de façon mobile vers le haut et vers le bas et mobile en rotation autour d'un axe debout , et un mécanisme de levier prévu sur le support (1) qui est couplé avec le pilon (3) de manière à ce que le mouvement de pivotement du levier d'actionnement (4) soit transformé aussi bien d'un mouvement dirigé vers le haut et vers le bas ainsi qu'un mouvement de pivotement du pilon (3).

2. Dispositif selon la revendication 1, **caractérisé en ce que** le mécanisme de levier comporte un levier d'actionnement (4) qui est couplé avec le pilon (3) de manière à ce qu'un mouvement dirigé vers le bas de l'extrémité du levier libre soit transformé dans un mouvement dirigé vers le haut du pilon (3) et **en ce que** le mouvement de l'extrémité du levier libre soit transformé dans un mouvement dirigé vers le haut du pilon (3).

3. Dispositif selon la revendication 2, **caractérisé en ce qu'**un élément de rappel (6) est prévu qui pousse le levier d'actionnement (4) dans sa position de départ supérieure.

4. Dispositif selon la revendication 3, **caractérisé en ce que** l'élément de rappel est un ressort à boudin (6).

5. Dispositif selon une des revendications 1 à 4, **caractérisé en ce que** le pilon (3) est cannelé sur son côté inférieur.

6. Dispositif selon une des revendications 1 à 5, **caractérisé en ce que** la disposition constituée d'un pilon (3) et d'un mécanisme de levier est disposée sur le support (1) réglable en hauteur .

7. Dispositif selon une des revendications 1 à 6, **caractérisé en ce que** le pilon (3) est constitué de bois ou de matière plastique.

8. Dispositif selon une des revendications 1 à 7, **caractérisé en ce qu'**un élément de protection contre les projections (9) est prévu sur la zone terminale supérieure du pilon (7), lequel élément recouvre le côté supérieur du récipient dans la zone de la position terminale inférieure du pilon (3).

9. Dispositif selon une des revendications 1 à 8, **caractérisé en ce que** le support (1) est fixé sur une plaque de base (2) qui forme une surface de pose pour le récipient.

10. Dispositif selon une des revendications 1 à 9, **caractérisé en ce qu'**une unité de découpe est prévu avec un support (1)

11. Dispositif selon la revendication 10, **caractérisé en ce que** le couteau est approprié pour couper un fruit en un mouvement vers le bas en au moins quatre parties.

12. Dispositif selon la revendication 10, **caractérisé en ce que** le couteau comporte plusieurs lames ou tronçons de lame qui sont disposés de façon convergente en forme d'étoile .

13. Dispositif selon la revendication 10, **caractérisé en ce que** le couteau comporte plusieurs lames qui sont disposées de manière parallèle l'une par rapport à l'autre.

14. Dispositif selon une des revendications 10 à 12, **caractérisé en ce que** des pilons sont prévus dans les interstices situés entre les lames ou les tronçons de lames disposées sur le couteau et pouvant être bougées vers le haut et vers le bas et sont poussés par des éléments de rappel , notamment par des ressorts à boudin en direction de leur position terminale inférieure.
